# EUROPEAN PATENT APPLICATION

(11) **EP 0 987 839 A1**
(43) Date of publication of application: **22.03.2000**
(21) Application number: 98307563.1
(22) Date of filing: 17.09.1998
(51) Int. Cl.: H04B 7/185

(54) **Call re-routing from a mobile user to a service provider**

(71) Applicant: ICO Services Ltd., Hammersmith, London W6 9BN (GB)
(72) Inventor: Taylor, Kevan James, Bedford, MK 40 (GB); Lokman, Latif, Wimbledon, SW19 7QZ (GB)
(74) Representative: Read, Matthew Charles

(57) **Abstract**

In a satellite mobile telecommunication network it is possible to determine the position of user terminal (la). A user requiring a service, dials a service number. Using the user terminal's position and a database of service providers with their location and their unique network number, the call is routed to the service provider nearest the user. Such a system is especially useful when routing calls to the emergency services, such as the police, fire and ambulance.

## Description

This invention relates to a mobile telecommunications system.

Terrestrial mobile telecommunications systems are well known and a number of different systems have developed which operate according to different standards. These public land mobile networks (PLMNs) may operate according to analog or digital standards. In Europe, the Far East, excluding Japan and elsewhere, the Global System Mobile (GSM) network has become popular, whereas in USA, the Advanced Mobile Phone Service (AMPS) and the Digital American Mobile Phone System (DAMPS) are in use, and in Japan, the Personal Handiphone System (PHS) and the Personal Digital Communication (PDC) network are used. More recently, proposals have been made for a Universal Mobile Telecommunications System (UMTS). These networks are all cellular and land-based with transmitter/receivers which communicate with mobile user terminals.

Considering for example the GSM system, individual cells of the mobile network are served by a series of geographically spaced, terrestrial base station subsystems (BSS) which each comprise a base transceiver stations (BTS) which are coupled through base station controllers (BSCs) to a mobile switching centre (MSC) which may provide a gateway out of the network to a conventional public switched telephone network (PSTN). The PLMN includes a home location register (HLR) which stores information about the subscribers to the system and their user terminals (UTs). When a UT is switched on, it registers with the HLR. If the user roams to a different GSM network, the user terminal registers with a visitor location register (VLR) of the visited network, which communicates with the HLR of the home network for routing and other purposes.

When a call is made from a PSTN to a UT roaming a different GSM network, the call is routed by a process known as "Roaming Re-Routing". The incoming call enters the PLMN at a Gateway Mobile Switching Centre (GMSC). The GMSC requires a mobile station roaming number (MSRN) to route the call to a VLR/MSC where the user terminal is currently located. The GSMC does this by sending a message application part (MAP) operation "Send Routing Information" to the HLR, which contains the mobile subscribers number (MSISDN). The HLR reads the MSISDN, looks the number up in its database and identifies to which VLR the subscriber is affiliated. The HLR sends a MAP operation "Provide Roaming Number" to the VLR. The VLR returns the MSRN to the HLR, which in turn, sends the MSRN to the GSMC so that the call can be routed. Roaming of a user terminal in different PLMN goes some way to establishing an international mobile telecommunications network. However, a drawback is that these networks are land based and are restricted to regions served by base transceiver stations. Also, different PLMNs operate to different standards in some countries and so it is not possible to roam on a global basis from network to network.

A number of different mobile telecommunication systems have been proposed that use satellite communication links to the mobile user terminals. One network known as the IRIDIUM ™ satellite cellular system is described in for example EP-A-0365885 and US Patent No. 5 394 561 (Motorola), which makes use of a constellation of so-called low earth orbit (LEO) satellites, that have an orbital radius of 780 km. Mobile user terminals such as telephone handsets are configured to establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed with an orbital radius in the range of 10-20,000 km and reference is directed to Walker J.G. "Satellite Patterns for Continuous Multiple Whole Earth Coverage" Royal Aircraft Establishment, pp 119-122 (1977). These orbits are also known as intermediate earth orbits (IEOs). The ICO ™ satellite cellular system described for example in GB-A-2 295 296 includes a constellation of MEO satellites. Communication does not occur between adjacent satellites and instead, a signal from a mobile user terminal such as a mobile handset is directed firstly to the satellite and then directed to a ground station or satellite access node (SAN), connected to a land-based telephone network. This has the advantage that many components of the system are compatible with known digital terrestrial cellular technology such as GSM.

In satellite communications networks, ground stations are located at different sites around the world in order to communicate with the orbiting satellites. In the ICO™ system and others, a visitor location register is associated with each of the satellite ground stations, which maintains a record of the individual user terminals that are making use of the particular ground station.

It would be desirable to provide a common service number for use by mobile telecommunication users, for example to call the police or an ambulance in the event of an emergency. However, the emergency number to be dialled is different in different regions of the world and so when roaming, for example with a satellite network, it is not readily possible to have a coherent emergency service provision.

With a view to overcoming this problem, the invention provides a mobile telecommunications system including a routing device to route calls to one of a plurality of geographically spaced service providers in response to a call from a user terminal for a particular service called using a characteristic code for the service in dependence upon the location of the user terminal initiating the call.

Preferably, the routing device comprises a database to store service provider routing information. The routing device may further comprises a routing switch and means responsive to an incoming call including a request for a particular service for interrogating the database to obtain routing information to route the call, the routing switch being responsive to the routing information to route the call to a selected service provider for the particular service.

The database may be configured to store network numbers for routing a call through a network to a service provider. The network number can be a telephone network number.

Accordingly, the database bay be configured to store language data, wherein the language is the language spoken by the service provider and the call may routed in dependence on the language data.

The database may be distributed in the telecommunications network.

The service may be an emergency service.

The telecommunications system may also include a control centre to receive a call routed thereto by the routing device and to permit selection of one of a plurality of different services as requested by the user.

The routing device may be configured to compare distances between the user terminal and at least two service providers and select routing information in dependence on the comparison. Preferably, the selected routing information is for the closest service provider.

The user terminal may be configured to prompt a user for further information once a characteristic code has been keyed in.

The call may be routed via satellite.

The system may include locating means to locate the user terminal, which may exchange locating signals via satellite with the user terminal.

Preferably, the location of the user terminal is stored in a location register.

The location of the user terminal may be known in terms of latitude and longitude.

Accordingly, the system may be cellular and may include a plurality of radio frequency cells which define the location of the user terminal.

The service providers may include signalling means to inform the routing means of their identity so to enable the routing means to route the call to one of the service providers.

According to the present invention there is also provided a method of routing a call in a mobile telecommunication system from a user terminal to one of a plurality of geographically spaced service providers in response to a call from a user terminal for a particular service called using a characteristic code for the service in dependence upon the location of the user terminal initiating the call.

The invention also includes an emergency location register for providing emergency service call routing information in a mobile satellite communications system comprising means to receive a request for routing information including caller location information, means to store emergency service routing information and location of emergency service providers, means to select routing information from a storage means in dependence on the caller location information and means to output the routing information.

According to the present invention there is further provided a method of providing emergency service routing information in a mobile satellite communication system comprising receiving requests for routing information including caller location information, selecting emergency service routing information in dependence on the caller location information and outputting the selected routing information.

In order that the invention may be more fully understood an embodiment thereof will now be described by way of example with reference to the accompanying drawings, in which:
Figure 1 is a schematic diagram of a satellite telecommunications system together with a local, land-based mobile telecommunications system;
Figure 2 is a schematic diagram of a mobile user terminal;
Figure 3 is a schematic block diagram of the circuits of the user terminal shown in Figure 2;
Figure 4 is a schematic diagram showing part of a home location register;
Figure 5 is a schematic diagram of a user terminal, emergency service command centres and ambulance stations in the same region;
Figure 6 is a schematic block diagram of part of the satellite communication network used to route a call through a PSTN;
Figure 7 is a schematic diagram showing part of a database of emergency service command centres;
Figure 8 is a schematic diagram of an emergency location register;
Figure 9 is a schematic block diagram illustrating intercommunication within the network according to the present invention;
Figure 10 is a schematic flow diagram for a mobile originating emergency call;
Figure 11 is a process flow diagram by which the routing information is extracted;
Figure 12 is a process flow diagram for searching for and selecting the emergency service command centre closest the user terminal;
Figure 13 is a schematic diagram showing a user terminal and ambulance stations in the same region;
Figure 14 is a schematic diagram showing part of a database of emergency service providers; and
Figure 15 is a schematic block diagram of part of the satellite communication network used to route a call through a satellite mobile network.

### Overview of network

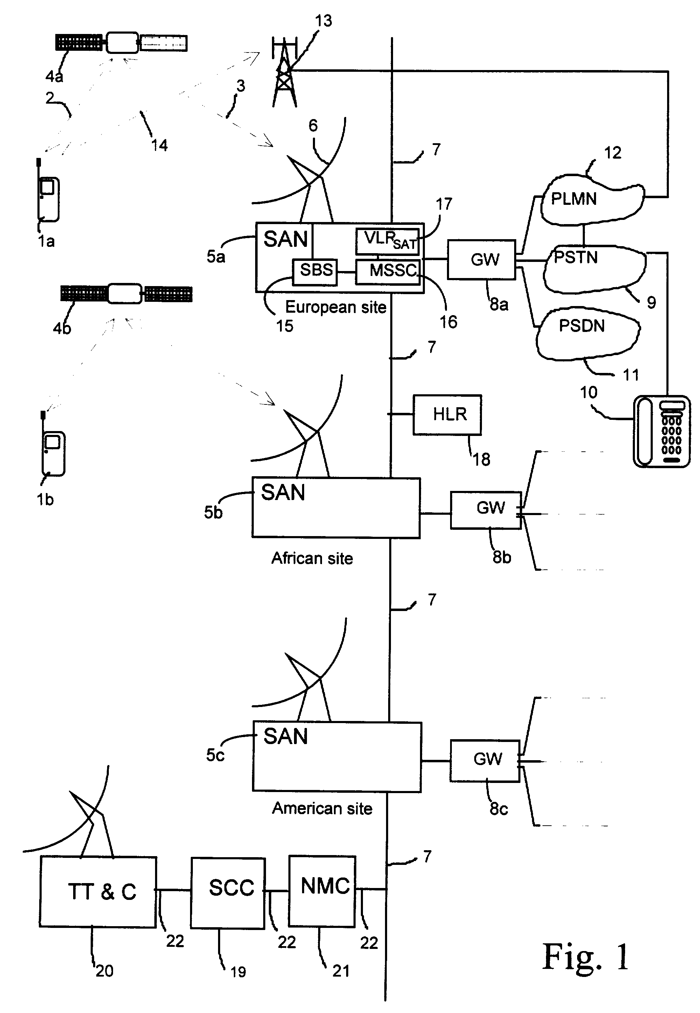

Referring to Figure 1, a schematic block diagram of a satellite mobile telecommunication network (SMN) is shown corresponding to the ICO™ network. A first mobile user terminal (UT) 1a in the form of a mobile telephone handset can communicate on a radio channel over a communication path 2, 3 via an earth orbiting satellite 4a with a first land-based satellite access node (SAN) 5a. As shown schematically in Figure 1, the first SAN 5a is provided with an antenna configuration 6 which can track the orbiting satellite 4a. The antenna configuration 6 may include five dish antennae for tracking individual ones of the satellites 4.

A number of the SANs 5a, 5b, 5c, etc are connected together to form a backbone network 7, which is connected through a number of gateways (GW) 8a, 8b, 8c, etc to conventional land-based telephone networks. For example, the first GW 8a is connected to a land-based public switch telephone network (PSTN) 9, which permits connection to be made to a conventional telephone set 10. The first GW 8a is additionally connected to a public switch data network (PSDN) 11 and a public local mobile network (PLMN) 12. Each GW 8a, 8b, 8c may comprise existing International Switching Centres or mobile switching centres (MSCs) of the type used in GSM mobile networks.

The user terminal 1a can also communicate with the conventional land-based mobile network PLMN 12, which is shown schematically to include a transceiver station 13 that establishes a duplex link 14 with the user terminal 1a. In this example, the PLMN 12 is a GSM network.

For a fuller understanding of GSM, reference is directed to the various GSM Recommendations issued by the European Telecommunications Institute (ETSI). Also reference is directed to "The GSM System for Mobile Communications" by M. Mouly and M-B. Paulet, 1992 Cell & Sys, ISBN:2-9507190-0-7, for a more readable overview.

The satellite network is designed to provide worldwide coverage and the satellites 4a, 4b form part of a constellation of satellites, which may be arranged in several orbits. In one example, two orbits of five satellites are used, which can be shown to provide coverage of a major part of the surface of the earth, in which for a 10° satellite elevation angle, one satellite can be accessed by the mobile handset all of the time and two satellites can be accessed for at least 80% of the time, thereby providing system redundancy. Additional satellites may be included in the constellation in order to provide further redundancy and diversity.

The satellites may be arranged in a MEO constellation, for example with an orbital radius of 10,355 km, although the invention is not restricted to a particular orbital radius. In this embodiment, satellites 4a, 4b are shown in a common orbit and the satellites are tracked by the antenna arrangement of each SAN. The SANs are spaced around the earth in order to provide continuous coverage. In the example shown, the first SAN 5a may be located in Europe whereas a second SAN 5b may be located in Africa, a third SAN 5c in America and other SANs may be located elsewhere.

The first SAN 5a consists of a satellite base station SBS 15 which is coupled to the five dish antennas 6 for tracking the satellites, the SBS 15 including transmitter and receiver circuits with amplifiers, multiplexers, demultiplexers and codecs. A mobile satellite switching centre MSSC 16 is coupled to the SBS and includes a satellite visitor location register VLR_{SAT} 17. MSSC 16 couples communication signals to the backbone network 7 and to the SBS 15, so as to allow individual telephone calls to be established through the backbone network 7 and the duplex communication link 2, 3 via the satellite 4a, to the mobile terminal 1a. Also, MSSC 16 is connected to the first GW 8a so as to provide an output connection to PLMN 12, together with PSDN 11 and PSTN 9. The VLR_{SAT} 17 maintains a record of each of the subscribers currently registered, namely the identity of each user that is making use of the first SAN 5a for signal communication. It will be understood that all the SANs are of similar construction with a respective VLR_{SAT} to maintain a record of the subscribers currently registered. The identity and location of all subscribers are stored in a home location register (HLR) 18, which is updated with information from the VLR_{SAT} 17.

In Figure 1, the second SAN 5b is shown communicating with a second user terminal 1b via satellite 4b. For further details of the network, reference is directed to GB-A- 2 295 296 and EP 97302222.1 filed on 1st April 1997.

The satellites 4a, 4b are in non-geostationary orbits and comprise generally conventional hardware such as the Hughes HS 601. They may include features disclosed in GB-A-2 288 913. Each satellite 4a, 4b is arranged to generate an array of radio beams covering a footprint on the earth beneath the satellite, each beam including a number of different frequency channels and time slots as described in GB-A-2 293 725. The beams thus provide adjacent cellular areas which correspond to the cells of a conventional land-based mobile telephone network. The satellites are controlled by means of a satellite control centre (SCC) 19 and a telemetry tracking and control station (TT&C) 20, which are connected to a network management centre (NMC) 21 through a digital network 22 that is coupled to the backbone network 7. The SCC 19 and the TT&C 20 control operations of the satellites 4a, 4b, e.g. for setting the general transmission power levels and transponder input tuning, as directed by the NMC 21. Telemetry signals for the satellites 4a, 4b are received by the TT&C 20 and processed by the SCC 19 to ensure that the satellites are functioning correctly.

During a telephone call, each of the handsets communicates with a respective SAN via one of the satellites. Thus for example, the first handset 1a communicates with the first SAN 5a via satellite 4a over paths 2, 3. Full duplex communication is provided between the first UT 1a and the first SAN 5a.

### User terminal

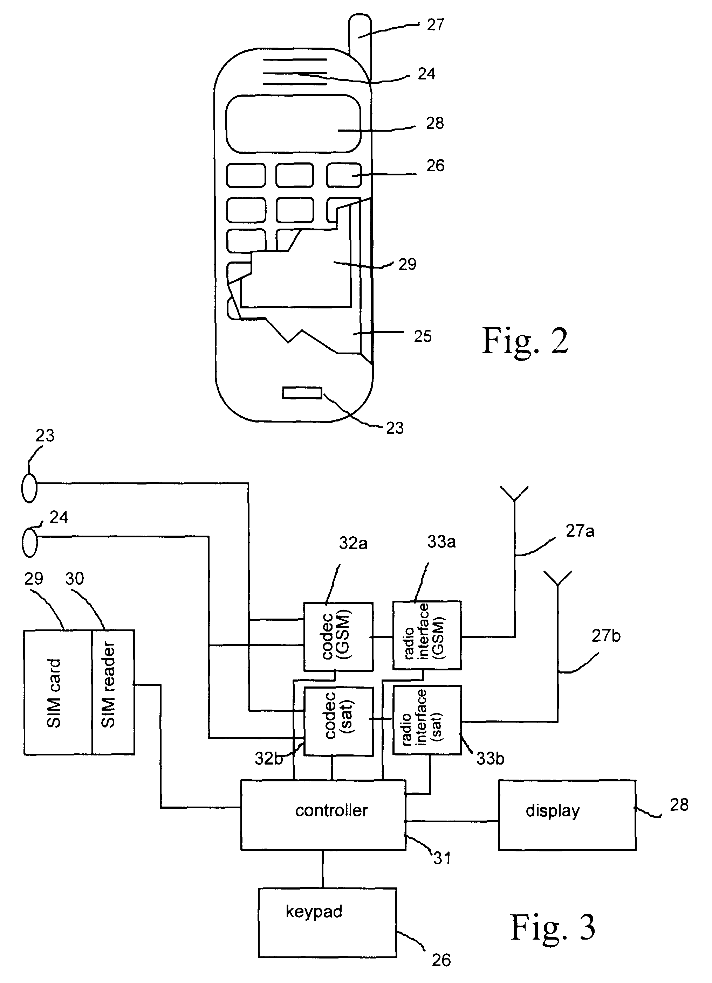

The first mobile user terminal 1a is shown in more detail in Figures 2 and 3. It comprises a hand held device which is generally similar to a mobile telephone used for conventional terrestrial GSM networks. It is powered by a rechargeable battery and is configured to operate with both the local terrestrial cellular network and the satellite network. Thus, in the example shown in Figure 1, the mobile handset 1a can operate either according to a land-based GSM protocol or roam onto the satellite network protocol. As shown in Figure 2, the handset comprises a microphone 23, a loudspeaker 24, a battery 25, a keypad 26, antennas 27a, 27b and a display 28. The handheld unit 1a also includes a subscriber identification module (SIM) smartcard 29. The circuit configuration of the handset 1a is shown in block diagrammatic form in Figure 3. The SIM card 29 is received in an SIM card reader 30 coupled to a controller 31, typically a microprocessor. The microphone and loudspeaker 23, 24 are coupled to first and second codecs 32a, 32b coupled to conventional radio interfaces 33a, 33b connected to the antennas 27a, 27b so as to transmit and receive communication signals, in a manner well known ***per se.*** The handset is capable of dual mode operation, with the codec 32a, radio interface 32a and antenna 27a being used with the GSM PLMN 12, and corresponding circuits 32b, 33b and 27b being used with the satellite network.

### Service provision

The process by which Mobile Originating (MO) call is made to a PSTN number will now be described.

When a call is initiated by the UT la, a radio link with the SBS 15 is established (that is, Radio Resources (RR) are allocated). A Service Request message is sent by the UT 1a to the SBS 15, requesting an MO call set-up, which is passed to the MSSC 16. Mobility management (MM) functions are performed,which includes an authentication sequence. With the allocation of radio resources (RR) and mobility management (MM) functionality in place, the call can be set up (call management (CM)).

Then, the UT 1a sends a "Setup" message, which contains the PSTN number dialled by the user of UT la, to the MSSC 16. The MSSC 16 analyses the request and sends an "Initial Address Message" (IAM) to the PSTN 9 via the first GW 8a in order to route the call to the dialled number of the PSTN 9. In the meantime, the MSSC 16 sends a message to the UT 1a informing it that the process of setting-up the call is in progress. Meanwhile, a Traffic Channel (TCH) between the SBS 15 and the UT 1a is assigned.

Having successfully routed the intended number, the PSTN 9 returns an "Address Complete Message" (ACM) to the MSSC 16, which in turn sends an "Alerting" message to the UT 1a informing the user with a ringing earpiece. When the called party answers the phone, an "ANswer Message " (ANM) is sent by the PSTN 9 to the MSSC 16, which in turn triggers delivery of a "Connect" message to the UT 1a. The call is now connected and communication between the two parties takes place.

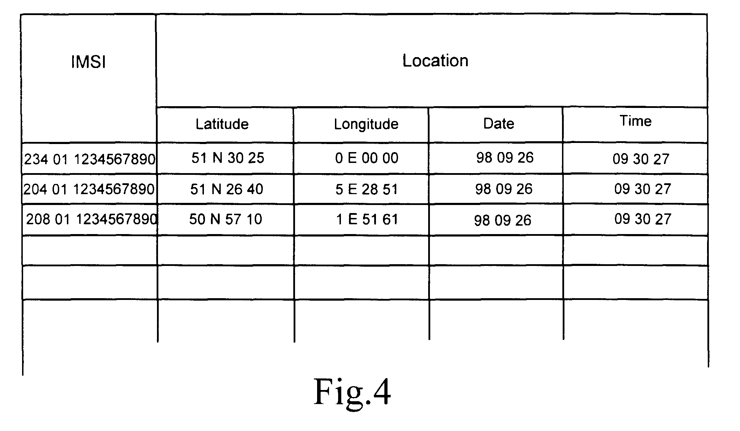

The satellite network defines the location the UT 1a in the VLR_{SAT} 17 and the HLR 18. Referring to Figure 4, the HLR 18 stores, for every subscriber, an International Mobile Subscriber Identity (IMSI) number, together with its location in terms of latitude, longitude, date and time. The IMSI comprises a Mobile Country Code (MCC), a Mobile Network Code (MNC) and a Mobile Station Identification Number (MSIN). It is the IMSI, stored in the SIM card 29, that gives the UT 1a its identity. The location of the UT 1a is evaluated by the SBS 15, using Doppler shift and time-of-flight measurements and is described in GB-A-2321812. The results of these measurements are stored in VLR_{SAT} 17 and in HLR 18. The location of UT 1a (by virtue that it holds the SIM card 29) is updated whenever the UT 1a is switched on, periodically whenever the UT 1a is in idle mode or whenever a call is initiated. Details of location updating are described EP 97309483.2 filed on 25th November 1997.

### MO emergency call routing to the nearest Command Centre

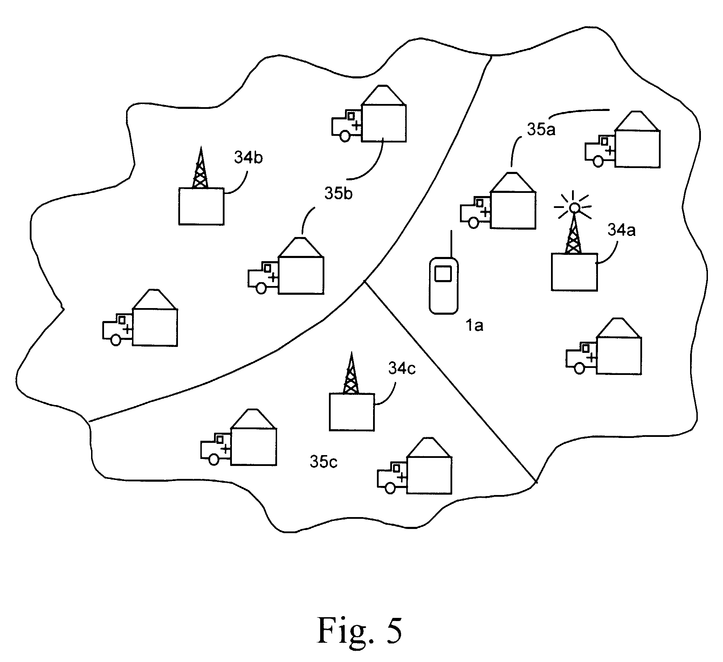

Referring to Figures 5 to 12, a first embodiment of the present invention, in which an MO emergency call is automatically routed to the closest emergency service command centre via a PSTN, will now be described.

Referring to Figure 5, a mobile user falls ill and requires an ambulance. There are a plurality of command centres 34a, 34b, 34c controlling a plurality of ambulance stations 35a, 35b, 35c and other emergency services e.g. fire, police. According to the present invention, the user enters an emergency number, which is common throughout the satellite network, for instance 911, and the call is routed to the closest command centre, which in this case is the first command centre 34a. An operator at the command centre 34a, asks the user which service is required (in this case ambulance). The operator, acting on information given by the user and/or information sent with via a data network, instructs the ambulance station 35a closest to the user to dispatch an ambulance.

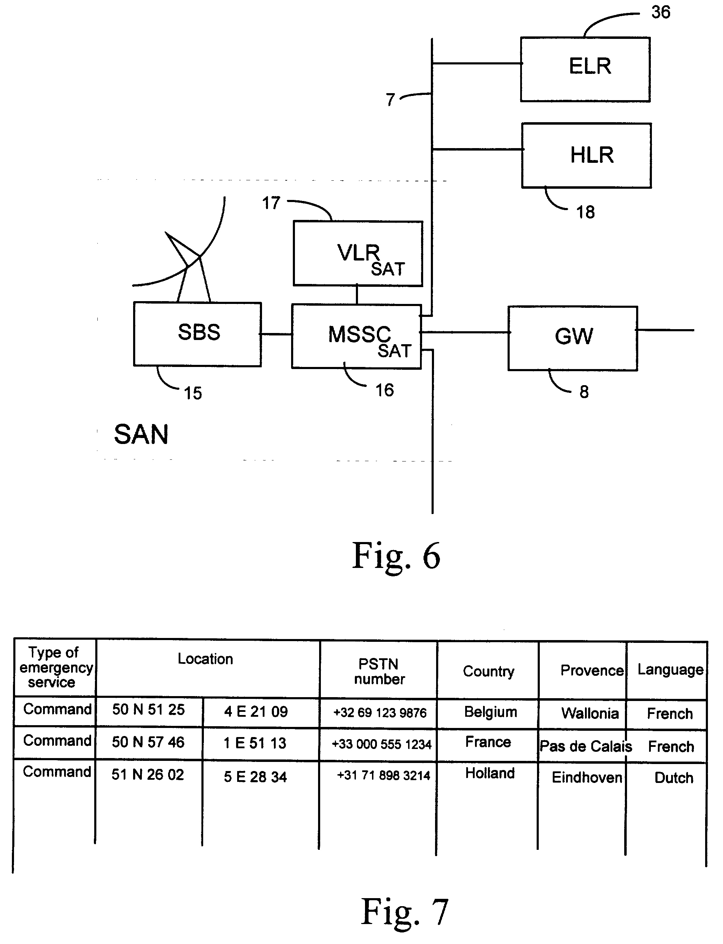

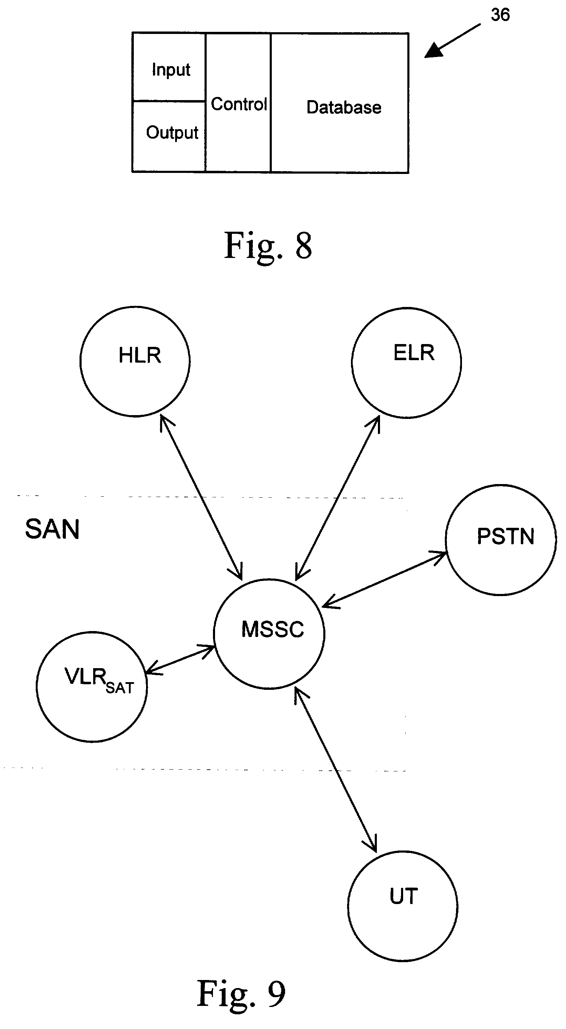

Referring to Figure 6, the ground network of the satellite communication system is configured to include an Emergency Location Register (ELR) 36. In this embodiment the ELR 36 comprises a database of emergency service command centres across the globe. Referring to Figures 7 and 8, the database lists the geographical position of command centres, together with a PSTN number which is unique to each command centre and other useful information, for instance the country, provence and language spoken at the command centre.

The ELR 36 can either be a single database or one that is distributed throughout the satellite network, with parts of the database being associated with the individual SANs 5. In addition to a database, the ELR 36 further comprises control circuity that is used for searching the database and input/output terminals for receiving SRI's and returning PSTN numbers respectively.

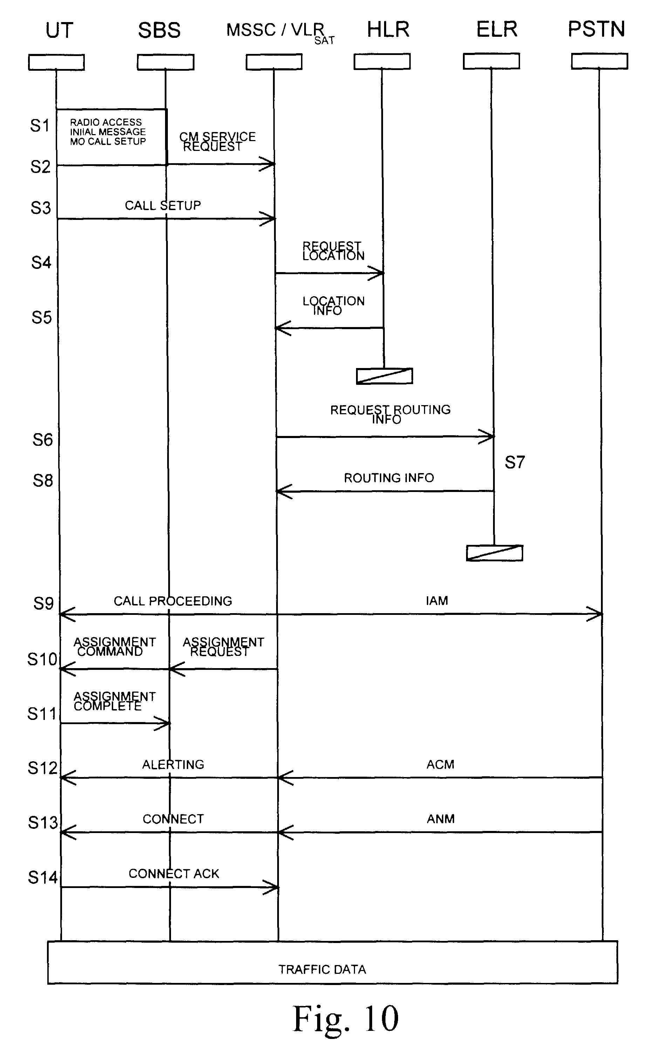

Referring to Figures 9 and 10, the process by which an emergency call is routed to the emergency service command centre is described more fully.

A user requiring the assistance of an emergency service, for instance an ambulance, keys a common emergency number into the UT 1a and enters "Send". The call is initiated in an identical fashion to a normal MO call with establishment of a RR radio link with an SBS 15 (step S1) and with the setting up of an MM connection (step S2). The UT 1a requests call set-up (step S3) and this is recognised by the MSSC 16 to be an emergency call, which then routes the call. Firstly, the MSSC 16 determines the location of the UT 1a. This can be done by looking up UT 1a location in the VLR_{SAT} or by requesting the information from the HLR (steps S4 and S5). Once the location of the UT 1a is known, the MSSC 16 sends a "Send Routing Information" (SRI) message to the ELR 36 (step S6), similar to a MAP operation in GSM. The SRI includes the UT 1a location obtained from the VLR_{SAT} 17 or the HLR 18 and so the ELR 36 is in a position to select the emergency service command centre most suited to help the user (step S7).

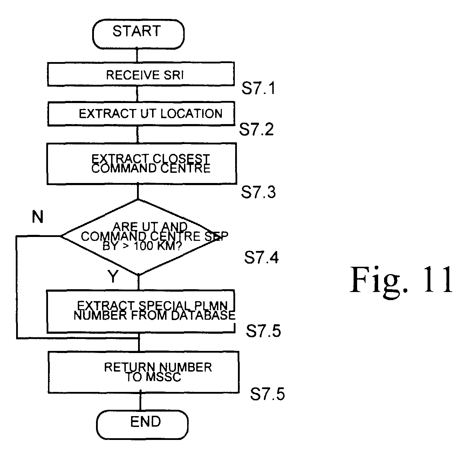

The process by which the ELR 36 searches for and selects the closest command centre is shown in Figure 11. The ELR 36 receives the request (step S7.1) and strips out the location of the user terminal 1a (step S7.2). The ELR 36 then searches for the closest command centre location (step S7.3).

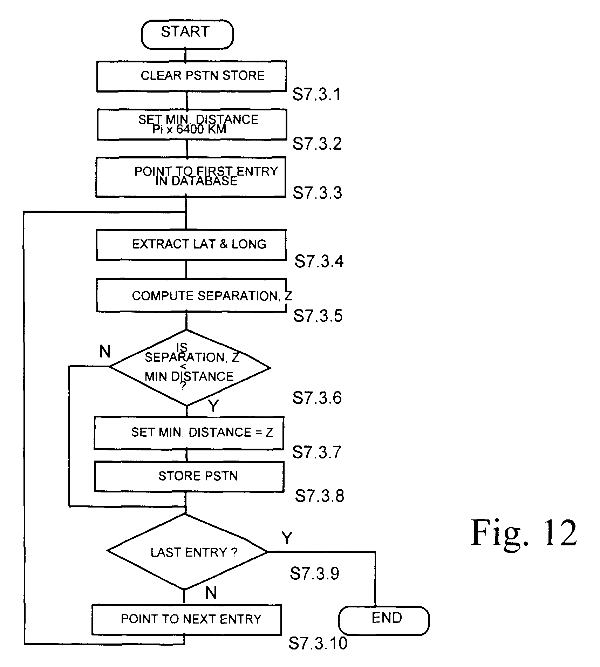

One method of finding the closest command centre is shown in Figure 12. The ELR 36 keeps a temporary store of the distance to the nearest command centre and its corresponding PSTN number. Before the search is carried out, these temporary stores are reset, with a large distance, for instance half the earth's circumference, placed in the minimum distance store (steps S7.3.1 and S7.3.2). A pointer points to the first entry of the data (step S7.3.3) and the search begins.

The latitude and longitude of the selected command centre are extracted from the database (step S7.3.4), the latitude and longitude of the UT 1a are subtracted and the distance between the two points is computed (step S7.3.5). If this distance is smaller than the distance held in store (step S7.3.6), then it replaces the old value (step S7.3.7) and the PSTN number is placed in memory (step S7.3.8). After this comparison, the ELR 36 checks whether the selected entry is the last in the database (step S7.3.9). If it is not, the pointer points to the next entry (step S7.3.10) and the process starts again. After the last entry the search is complete. Thus, the temporary store holds the PSTN number of the closest command centre, together with its distance from the UT 1a.

Referring again to Fig. 11, the chosen command centre can be examined for its suitability (step S7.4). For example, if the user terminal and the command centre are separated by a great distance, 100 km say, it may be more suitable to direct the call to a special command centre (step S7.5), such as a flying doctor station. Having determined the most suitable command centre, its PSTN network number is returned to the MSSC 16 (step S7.6).

Returning to Figure 10, following the step of returning the PSTN number to the MSSC 16 (step S8), the MSSC 16 continues to route the call as a normal MO call. The MSSC 16 sends an "Initial Address Message" (IAM) to the PSTN 9 via the GW 8a (step S9). In the meantime, the MSSC 16 sends a message to the UT 1a informing it the process of setting-up the call is in progress. Meanwhile, a Traffic Channel (TCH) between the SBS 15 and the UT 1a is assigned (steps S10 and S11).

Having successful routed the intended number, the PSTN 9 returns an "Address Complete Message" (ACM) to the MSSC 16, which in turn sends an "Alerting" message to the UT informing the user with a ringing earpiece (step S12). When the called party answers the phone, an "ANswer Message " (ANM) is sent by the PSTN 9 to the MSSC 16, which in turn triggers delivery of a "Connect" message to the UT 1a (step S13). The call is now connected and the UT 1a acknowledges this by sending a message to the MSSC 16 (step S14). The UT 1a is now connected to the closest emergency command centre.

### MO emergency call routing to the nearest Emergency Service

In an alternative embodiment, the required emergency service can be targeted by the user and the MO emergency call is routed to the closest ambulance, police, fire or coast-guard station. The caller enters the common emergency service number, for instance 911, and an additional digit, X. The handset can be configured to prompt the user as to which service is required once 911 has been entered, or the user can enter a four-figured digit. For instance, X=0 corresponds to command centre, X=1 police, X=2 ambulance, X=3 fire, X=4 coast-guard, X=5 mountain rescue.

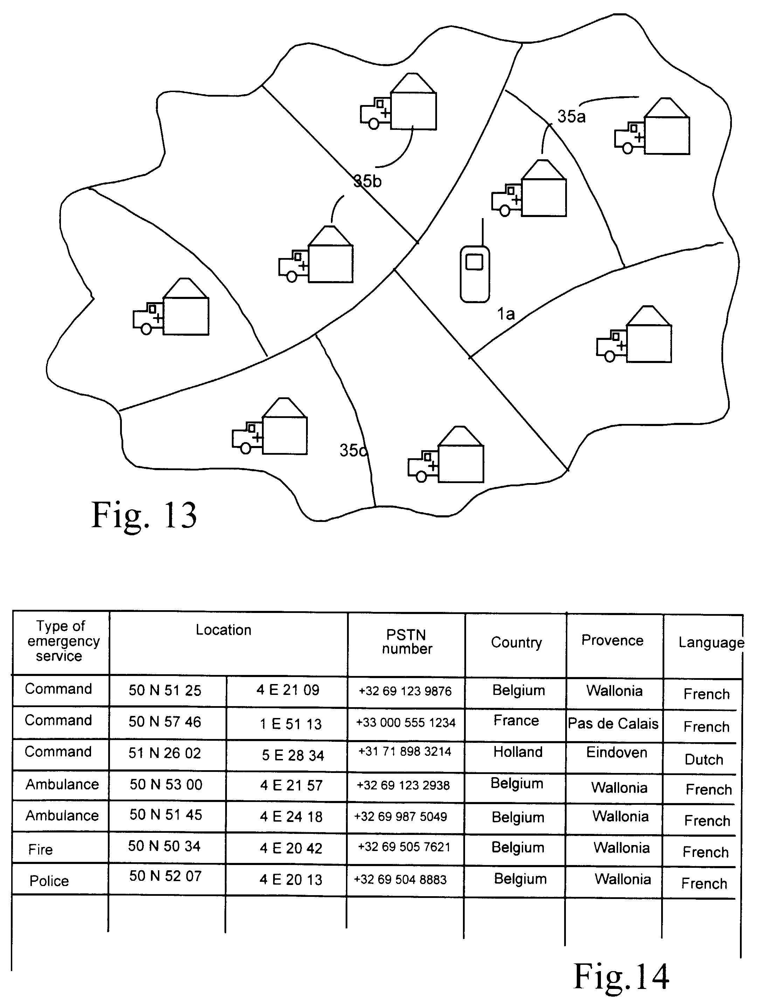

Referring to Figure 13, the same emergency situation presents itself to the unfortunate user. Knowing that an ambulance is required, the user keys in 9112. To begin with, the call is routed in the same manner as before. The MSSC 16 recognises the first three digits to be an emergency number and obtains the location of the UT 1a from the VLR_{SAT} 17 or requests the location from the HLR 18. On receiving this information, the MSSC 16 then requests an emergency service PSTN number from the ELR 36, sending not only the location of the UT 1a but also information regarding the type of service required. Using algorithms similar to those in Figures 11 and 12, the ELR 36 searches only ambulance entries in the database and from these select the nearest ambulance station to the user terminal. The ELR 36 then returns this routing number back to the MSSC 16. This embodiment requires a larger database, part of which is shown in Figure 14.

An alternative to having a single ELR 36, would be to have a database set aside for each emergency service, for example an ambulance ELR (AELR), a police ELR (PELR) etc. Thus, the MSSC 16 receives an emergency call 9112, and sends a request for the number of an ambulance station to the AELR.

### MO call routing to the nearest non-Emergency Service

This principle of routing a call to the closest emergency service can be applied to the provision of other services, such as taxi hire and pizza delivery. An acknowledged number for a particular service is keyed in, for example "0700 PIZZA" or "0800 TAXI", and the call is routed to the nearest taxi firm or pizza parlour. As mentioned in the previous embodiment, each service could have its own location register. For example, the keyed entry "PIZZA" instructs the MSSC 16 to send the SRI to a pizza location register, which then searches for the closest pizza parlour. Furthermore, the user terminal's location can be sent simultaneously to the pizza parlour via PSDN, to help with delivery.

### MO emergency call routing to the nearest Command Centre via the Satellite Mobile Network (SMN)

It is very likely that the nearest Emergency Service Command Centre 34a and the UT 1a lie in the same spot beam. Even more likely, is that the command centre 34a and the UT 1a lie in the field of view of the same satellite. Thus, an MO emergency call can be routed by the MSSC 16 to the command centre 34a via the same satellite that picks up the call. Command centres are fitted with semi-fixed user terminals, allowing them access to an SMN.

The call is initiated in a similar way to previous embodiments, with the user entering an emergency number, for instance 911, which is common throughout the satellite network. Having established the radio link with the SBS 15, the UT 1a requests emergency call set-up. The MSSC 16 can deal with this request in one of two ways.

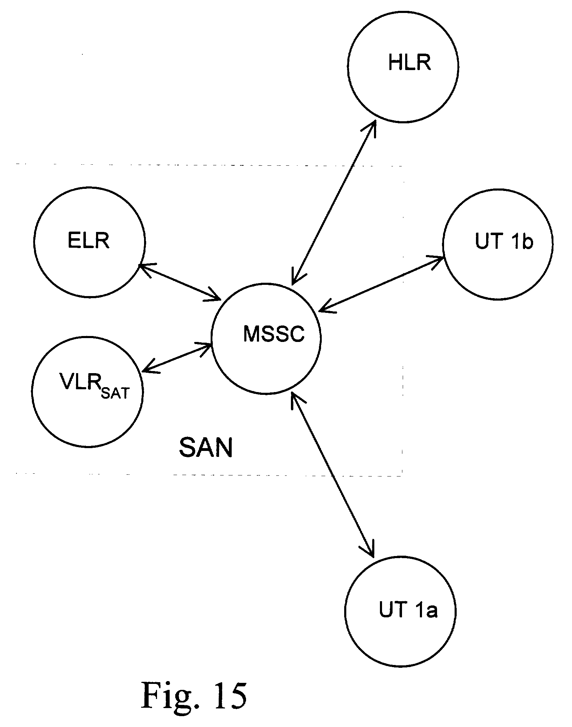

Referring to Figure 15, in a first method, the MSSC 16 obtains the location of the UT 1a from the VLR_{SAT} 17 and requests routing information from an ELR 36 located at the SAN 5a. The ELR 36 holds IMSI and location data for command centres; however it need not list all command centres across the globe, but only those within the field of view of satellites 4a, 4b with which the SAN 5a can directly communicate. The ELR 36 returns the IMSI and the MSSC 16 allocates a Mobile Satellite Roaming Number (MSRN) for the nearest emergency service command centre 34a having a semi-fixed UT 1b. The MSSC 16 routes the call to UT 1b as if it were a Mobile Terminating (MT) call. This method forces the call to be routed via the SMN rather than the PSTN. Using this method, it is likely that the nearest command centre 34a is in the same spot beam as the UT 1a or at least one adjacent to it.

A second method, not only forces the emergency call to the command centre to be routed through the SMN but also to route the call though the same spot beam that UT 1a lies in (which, for conciseness, is called the "calling cell"). This method only requires knowledge of the approximate position of UT 1a, namely the identity of the calling cell.

When the emergency call set-up request is delivered to the MSSC 16, additional information, regarding the identity of the calling cell, the satellite used or location data provided by the UT 1a itself, is also transferred. Alternatively, the MSSC 16 can obtain the precise UT 1a location from VLR_{SAT} 17 and deduce which spot beam is the calling cell. The MSSC 16 issues a paging request to the SBS 15, requesting a paging message to be broadcast in the calling cell. The SBS 15 broadcasts a paging message on a paging channel (PCH) which can be specific to the emergency services. Command centres within the calling cell receive the paging message and respond with an acknowledgement, which includes their IMSI number. The first command centre to respond is selected and the emergency call is routed to the selected command centre. Such a system has the advantage that a response by at least one command centre is very likely. Another advantage is that no database of emergency service providers is needed.

One advantage of routing the emergency call through a satellite mobile network is that it does not rely on ground-based networks. This may be useful in isolated regions of the world, areas with unreliable communication infrastructure or regions prone to natural disasters.

Further modifications and variations of the invention are possible. For example when the UT 1a initiates the call, it informs the ELR 36, via the MSSC 16, of the user's spoken language. When routing information is requested, the ELR 36 checks the user's languages against that of the selected emergency service number. If different, the ELR 36 can return the number of an international switchboard, or the number of the closest emergency service that speaks the user's language. Alternatively, the nationality and the spoken language of the emergency service is returned to the user terminal, together with the user terminal's position. In this case, to avoid language problems, the user terminal (or the MSSC 16 on the UT's behalf) can select, from memory, a standard distress message in the foreign language, paste in the user's location and number and either send a fax or a text message to the emergency service.

The ELR 36 may be maintained and managed as a separate entity and provided as a service to one or more mobile satellite networks.

The invention is not restricted to the described signal channels and can be used with conventional GSM, or other known mobile protocols. The invention also can be used with other satellite systems such as the IRIDIUM system discussed hereinbefore. Whilst the user terminals have been described as mobile, it will be understood that they may be semi-mobile, e.g. mounted on a ship or aircraft, and may actually be stationary during operation.

## Claims

1. A mobile telecommunications system including a routing device to route calls to one of a plurality of geographically spaced service providers in response to a call from a user terminal for a particular service called using a characteristic code for the service in dependence upon the location of the user terminal initiating the call.

2. A system according to claim 1 wherein the routing device comprises a database to store service provider routing information.

3. A system according to claim 2 wherein the routing device further comprises a routing switch and means responsive to an incoming call including a request for a particular service for interrogating the database to obtain routing information to route the call, the routing switch being responsive to the routing information to route the call to a selected service provider for the particular service.

4. A system according to either claim 2 or 3 wherein the database is configured to store network numbers for routing a call through a network to a service provider.

5. A system according to claim 4 wherein the network number is a telephone network number.

6. A system according to any one of claims 2 to 5 wherein the database is configured to store language data, wherein the language is the language spoken by the service provider.

7. A system according to claim 6 wherein the call is routed in dependence on the language data.

8. A system according to any one of claims 2 to 7 wherein the database is distributed in the telecommunications network.

9. A system according to any preceding claim wherein the service is an emergency service.

10. A system according to any preceding claim including a control centre to receive a call routed thereto by the routing device and to permit selection of one of a plurality of different services as requested by the user.

11. A system according to any preceding claim wherein the routing device is configured to compare distances between the user terminal and at least two service providers and select routing information in dependence on the comparison.

12. A system according to claim 11 wherein the selected routing information is for the closest service provider.

13. A system according to any preceding claim wherein the user terminal is configured to prompt a user for further information once a characteristic code has been keyed in.

14. A system according to any preceding claim wherein the call is routed via satellite.

15. A system according to any preceding claim including locating means to locate the user terminal.

16. A system according to claim 15 wherein the locating means exchanges locating signals via satellite with the user terminal.

17. A system according to any preceding claim wherein the location of the user terminal is stored in a location register.

18. A system according to any preceding claim wherein the location of the user terminal is known in terms of latitude and longitude.

19. A system according to any preceding claim which is cellular and includes a plurality of radio frequency cells which define the location of the user terminal.

20. A system according to claim 1 wherein service providers include signalling means to inform the routing means of their identity so to enable the routing means to route the call to one of the service providers.

21. A method of routing a call in a mobile telecommunication system from a user terminal to one of a plurality of geographically spaced service providers in response to a call from a user terminal for a particular service called using a characteristic code for the service in dependence upon the location of the user terminal initiating the call.

22. An emergency location register for providing emergency service call routing information in a mobile satellite communications system comprising means to receive a request for routing information including caller location information, means to store emergency service routing information and location of emergency service providers, means to select routing information from a storage means in dependence on the caller location information and means to output the routing information.

23. A method of providing emergency service routing information in a mobile satellite communication system comprising receiving requests for routing information including caller location information, selecting emergency service routing information in dependence on the caller location information and outputting the selected routing information.
